# EUROPEAN PATENT SPECIFICATION

(11) **EP 3 294 071 B1**
(45) Date of publication and mention of the grant of the patent: **29.01.2020**
(21) Application number: 16715574.6
(22) Date of filing: 12.04.2016
(51) Int. Cl.: A23L 2/52, A23P 10/30, A23L 7/126, A23L 11/00, A23L 7/10, A23L 7/161, A23L 27/00, A23L 5/40, A23L 25/00

(54) **A METHOD FOR ENCAPSULATING ADDITIVES INTO SEEDS, BEANS, NUTS, CEREALS AND PSEUDO-CEREALS**
VERFAHREN ZUR VERKAPSELUNG VON ZUSATZSTOFFEN IN SAMEN, BOHNEN, NÜSSEN, GETREIDE UND PSEUDO-GETREIDE
PROCÉDÉ D'ENCAPSULATION D'ADDITIFS DANS DES GRAINES, DES FÈVES, DES NOIX, DES CÉRÉALES ET DES PSEUDO-CÉRÉALES

(30) Priority: 20.04.2015 WO PCT/EP2015/164240; 15.12.2015 WO PCT/EP2015/200257
(43) Date of publication of application: 21.03.2018
(73) Proprietor: Sensient Flavors Limited, Bletchley Milton Keynes MK1 1HP (GB)
(72) Inventor: WHITEHEAD, Ian, 1978 Lens (CH); MORALES-DURAN, Ulises, 54080 Tlalnepantla (MX); HOI KI SIN, Emily, Milton Keynes MK10 7EH (GB)
(74) Representative: Roufosse, Micheline C.
(86) International application number: PCT/EP2016/058026
(87) International publication number: WO 2016/169815

(56) References cited:
- DE-A1- 4 202 320
- US-A1- 2007 054 032
- US-A1- 2010 221 397

## Description

### Field of the invention.

The present invention discloses the use of subcritical or supercritical carbon dioxide for injecting additives into seeds, beans, nuts, cereals and pseudo-cereals.

### Background.

In the food industry, there is an increasing demand for flavoured seeds, beans, nuts, cereals and pseudo-cereals for use in food and beverage applications. There is also a demand to provide heat-stable flavouring systems for food products that are prepared using high temperature cooking methods including baking, grilling and frying.

An example of this requirement is flavoured and/or coloured popcorn. The traditional way to prepare flavoured popcorn was to add the flavouring after popping the kernels. It was a necessary requirement as the kernels must be covered with, or cooked in, vegetable oil prior to cooking and that said oil reaches temperature of between 200 and 320 °C that would burn or damage flavours and other ingredients added prior to the cooking step.

Seasoning systems for flavouring popcorn contain materials to add base notes and mouth-feel to the whole product. However, such materials are heat-labile and often cannot withstand the heating temperature and time for cooking the kernels typically ranging between 200 and 320 °C during a period of time of 1 to 3 min. They include, but are not limited to vegetable powders that can be selected from onion, garlic and chili peppers, or milk solids, or protein powders or carbohydrates such as sugars. They can also include encapsulated flavours that have been spray-dried or encapsulated onto carrier agents such as maltodextrins, modified starches, emulsifying gums, proteins, alginates and other materials known in the art, that are used in the manufacturing of powdered flavours. Such products suffer from the high temperatures reached during cooking without protecting the liquid flavour inside the matrix. The exposure of such products to the high temperatures of 200 to 320 °C encountered in microwave cooking process, leads to scorching and burning and the consequent generation of highly undesirable burnt odours and tastes.

Furthermore, the traditional method of flavouring popcorn by the topical application of a seasoning powder or coating, suffers from the disadvantage that the flavour is only present on the surface of the popcorn. This leads to a rapid loss of flavour impact as the popcorn is masticated in the mouth, leading to consumer dissatisfaction

In addition, although there is a limited number of flavours or flavouring ingredients that can be added to the cooking oil, e.g. butter flavour, the materials had to be largely limited to those that were resistant to the high thermal stress encountered during the cooking process. More subtle and delicate flavourings or flavouring ingredients, that were most likely to suffer loss through evaporation, thermal degradation or thermally-catalysed reactions, could therefore not be used to flavour popcorn.

Popcorn is typically eaten by hand. As a consequence, flavouring materials coating popcorn were invariably and undesirably transferred to the hands and fingers rather than to the mouth with the drawback of loss of popcorn flavouring and unpleasantly smelling hands and fingers. Additonally, coloured flavourings and coatings lead to undesirable staining of the hands and fingers.

Also, flavoured popcorns may comprise mixed flavours such as for example the 'Chicago mix'. Such mix comprises a mixture of cheese and toffee flavoured popcorn. It is desirable that individual popcorn retain the original flavouring but that the whole bulk pack contain a mixture of these flavoured popcorn. It is however undesirable that individual popcorn become contaminated with opposing flavourings or colourings. In the case of the 'Chicago mix' it is impossible to prevent toffee-flavoured popcorn becoming cross-contaminated with cheese flavour from the cheese-flavoured popcorn and vice versa. Such a drawback can only be prevented by manufacturing individual flavoured batches and by creating the mixed flavour batch at the point of consumption thereby requiring a large and complex serving arrangement.

Flavoured popcorn kernels packages must therefore contain separate pouches of unpopped corn kernels and flavouring.
Several attempts to overcome these problems have been developed.
US-5,520,942 discloses a method that used a supercritical fluid or high pressure gas as a spray medium or carrier for food additives. The food additive was spray-coated onto the surface of food products, said additive coating being obtained from a solution, suspension or dispersion of the additive and a supercritical fluid or high pressure gas. The preferred supercritical fluid was supercritical carbon dioxide. US-5,759,599 and WO93/19622 disclose a method for flavouring and mechanically processing food products with polymer encapsulated flavour oils. The flavour capsules were injected into food products such as meat, poultry and dough and were fracturable upon chewing in order to release the flavour when needed.

DE4202320 discloses a method for impregnating substrates such as leather, or paper or seeds wherein the impregnant is contacted with the substrate, then brought into contact with a supercritical fluid for a period of time and then converted stepwise to the non-critical state. The infused seed products suffer from the disadvantage of having very little flavour and of being difficult to dry and to handle.

US2007/054032 discloses a method for impregnating a support matrix with a solid or liquid compound using a compressed gas or mixtures of gases with at least two unsymmetrical pressure changes. The impregnating substance can be selected from biologically active compounds or technical material or metal-organic compounds. The support matrix can be of biological origin, organic or inorganic substance with large inner surfaces or inner surfaces that are difficult to access.

US2010/221397 discloses a method for reducing the content of undesired species, such as fat, from prepared food, without losing the mechanical integrity of those products. The method involves post-processing of prepared food by at least one treatment with a supercritical fluid. That extraction can be followed by injection of additives, such as flavor or colour, into the treated food product. Said injection can be carried out by any method known in the art. It is disclosed as a possibility and the only method for injecting additives explicitly disclosed is by spraying.

It is thus desirable to provide simple one-pouch packages containing un-popped popcorn kernels together with a complete and heat-stable flavouring system and/or mixtures of these.
Another disadvantage of the traditional flavouring method is that the flavours only coat the surface of the seeds, beans, nuts, cereals and pseudo-cereals, thereby providing a very weak and transient flavouring.
It is thus desirable to provide seeds, beans, nuts, cereals and pseudo-cereals offering an intense and long-lasting flavour.

### List of figures.

Figure 1 represents a photo micrograph of the longitudinal cross-section of Italian round rice grains using light microscope, showing respectively a fully impregnated rice grain and a partially impregnated rive grain.
Figure 2 represents the solubility of sucralose expressed in mg of sucralose per kg of CO₂ as a function of the percentage of ethanol in CO₂.
Figure 3 represents the concentration of flavour molecules expressed in ppm as a function of CO₂ flush time expressed in minutes.
Figure 4 represents the weight of excess flavour expressed in g as a function of CO₂ flush time expressed in minutes.
Figure 5 represents the cinnamon oil concentration expressed in ppm as a function of time expressed in hours for solvents selected respectively from no solvent, ethanol (EtOH), triacetin (GTA) and medium chain triglycerides (MCT).
Figure 6 represents the cinnamon oil concentration in poppy seeds expressed in ppm as a function of impregnation conditions using respectively supercritical CO₂ condition and liquid CO₂ condition.
Figure 7 represents the concentration of cinnamon oil in blue poppy seeds expressed in ppm for a mixture of 1% cinnamon oil in MCT respectively without and with pre-extraction of lipids.
Figure 8 represents the concentration in quinoa of impregnating solutions selected respectively from ethyl caproate, furaneol, menthol and vanillin, expressed in ppm, for CO₂ flushing times of respectively 0, 15 and 30 minutes.
Figure 9 represents comparison curves of flavour release, detected by MS-Nose, in a cereal bar, wherein the intensity, expressed in % of the full intensity of impregnated seeds, is plotted as a function of time in seconds, respectively for liquid impregnation, spray-dried impregnation and supercritical carbon dioxide impregnation of the seeds.
Figure 10 represents the flavour release, detected by panelists, in cereal bars wherein the intensity, expressed in % of the full intensity of impregnated seeds, is plotted as a function of time expressed in seconds respectively for liquid impregnation, spray-dried impregnation and supercritical carbon dioxide impregnation of the seeds.

### Summary of the invention.

It is an objective of the present invention to provide a method for injecting flavours inside seeds, beans, nuts, cereals and pseudo-cereals.
It is also an objective of the present invention to provide flavoured seeds, beans, nuts, cereals and pseudo-cereals offering an intense and long-lasting flavour.
It is another objective of the present invention to add flavour ingredients to seeds, beans, nuts, cereals and pseudo-cereals.
It is yet another objective of the present invention to add colouring to seeds, beans, nuts, cereals and pseudo-cereals.
It is also an objective of the present invention to add sweeteners to seeds, beans, nuts, cereals and pseudo-cereals.
It is a further objective of the present invention to add antioxidants to seeds, beans, nuts, cereals and pseudo-cereals.
It is another objective of the present invention to add vitamins to seeds, beans, nuts, cereals and pseudo-cereals.
It is yet a further objective of the present invention to add other functional ingredients to seeds, beans, nuts, cereals and pseudo-cereals with examples such as, but not limited to, taste modulators including taste potentiators and taste masking agents.
It is also an object of the present invention to provide ready to eat one-pouch mixed flavoured seeds, beans, nuts, cereals and pseudo-cereals.
Any one or more of the foregoing objectives have been realised as described in the independent claim.
Preferred embodiments are described in the dependent claims.

### Detailed description of the invention.

Accordingly, the present invention discloses a method for injecting additives to seeds, beans, nuts, cereals and pseudo-cereals that comprises the steps of:
a) charging an impregnation chamber with the seeds, beans, nuts, cereals and pseudo-cereals;
b) preparing an impregnation fluid by mixing the desired additives, optionally with a solvent and at a volume ratio additives to solvent ranging between 1:0 and 1:200;
c) injecting the impregnation fluid of step b) into the impregnation chamber under subcritical or supercritical CO₂ conditions, and contacting with the seeds, beans, nuts, cereals and pseudo-cereals of step a) for a period of time of at least 15 minutes;
d) optionally flushing the impregnated seeds, beans, nuts, cereals and pseudo-cereals of step c) with subcritical or supercritical CO₂ in order to remove traces of impregnation fluid;
e) depressurising the impregnation chamber;
f) retrieving ready-to-use seeds, beans, nuts, cereals and pseudo-cereals containing the desired additives.

In a preferred embodiment according to the present invention, in step c), the impregnation fluid is injected into the impregnation chamber under supercritical conditions at a temperature of at least 31 °C and a pressure of at least 72.8 bars.

In step c), the contact time preferably ranges between 15 minutes and 5 hours, more preferably between 30 minutes and 3 hours.

In step e) the impregnation chamber is preferably depressurised at a rate ranging between 1 and 60 seconds per bar, more preferably between 3 and 20 seconds per bar. The carbon dioxide is evaporated and is optionally but preferably recycled.

The seeds, beans, nuts, cereals and pseudo-cereals are preferably selected from corn kernels, sunflower seeds and pumpkin seeds but may also be of any edible seeds including chia, flax, hemp, poppy, sesame, safflower, raspberry, or may be dry edible beans, including for example, adzuki, broad beans, kidney beans and lentils, or edible nuts including as examples almond, cashew, hazelnuts, macadamia, pine, pistachio, and walnuts, or green and roasted coffee beans, or whole grain cereals such as barley, buckwheat, corn, millet, oats, rice, sorghum, quinoa, wheat.

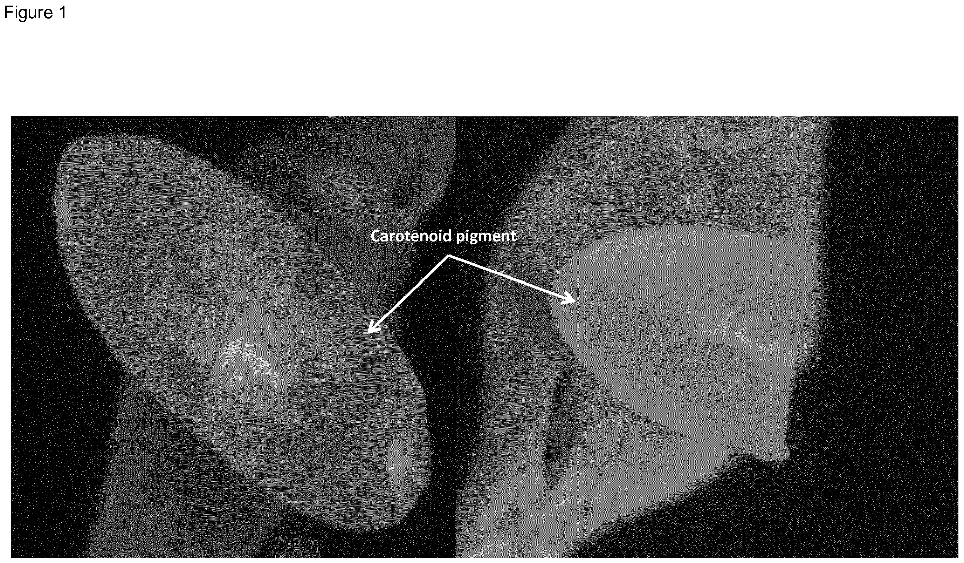

Impregnation of simple open structures such as polymers, finely divided powders or wood using supercritical carbon dioxide is known in the art and has been described for example in J. of Supercritical Fluids, 57 (2011) 73-79 describing the supercritical carbon dioxide impregnation of lactulose on chitosan, or in J. of Supercritical Fluids, 58 (2011) 313-319 describing the supercritical impregnation of lavandin essential oil in modified starch, or in J. Agric. Food Chem 49 (2001) 270-275 describing the infusion of volatile flavour compounds into low-density polyethylene or in J. of Supercritical Fluids, 61 (2012) 221-228 describing the impregnation of flax oil in pregelatinised corn starch.
Impregnation method using supercritical carbon dioxide has however never been used to infuse complex structures of natural material having an external barrier layer, such as pericarp, present in the seeds, beans, nuts, cereals and pseudo-cereals of this invention. In addition, the prior art methods have been used to infuse additives into simple open structures, said additives being retained in the final products. By using the method of the present invention, the additivated food products are designed to release the flavour with strong and long lasting effects.
Contrary to prior art food products, such as those of J. of Supercritical fluids, 57, 73-79, 2011 wherein the flavours are sprayed on the surface of said food products, the present invention aims at injecting the flavour beneath the surface of the seeds, beans, nuts, cereals and pseudo-cereals as can be seen in Figure 1. This figure clearly shows that the carotenoid pigments can fully impregnate the rice grains all the way to the core, even though carotine is hydrophobic and starch is hydrophyllic. The present method creates interactions between the matrix and the various components present in flavour products. It has been observed that such interactions depend upon the nature of the components present in the flavour product thereby producing distortion of the encapsulated flavour, some components being infused faster than others. Producing the desired final flavour is therefore not obvious. We believe that the method of the present invention encapsulates the additives within the seeds, beans, nuts, cereals and seeds, beans, nuts, cereals and -cereals. They can therefore offer an intense and long-lasting flavour. In addition, the encapsulation of additives inside the seeds, beans, nuts, cereals and pseudo-cereals increases the stability of the encapsulated material resulting in a longer shelf life. The solvents of step b), if present, are selected depending upon the application. In the case of food applications, they are selected from food grade solvents comprising for example ethanol, middle chain triglyceride (MCT), triacetin, vegetal oil, water or a combination thereof. It has been observed that the nature of the solvent or combination thereof plays an important role in the resulting flavoured product. It can play a role in the selectivity and/or the solubility of the additives, and/or in the flavour release and the stability of the final product.
In another embodiment according to the present invention, the impregnating flavour can be extracted in situ from another food product with carbon dioxide under supercritical conditions and be transported with the flow of carbon dioxide to the impregnating chamber.

By the method of the present invention also food and beverage applications are obtained comprising the impregnated seeds, beans, nuts, cereals and pseudo-cereals. Examples of food and beverage applications are presented in but not limited to Table 1.

**Table 1**

| Infused product format | sweet goods | savoury | beverage |
|---|---|---|---|
| Ready-to-consume or ready-to-process | -nuts | -beans | -coffee beans (green or roasted) |
| | -popcorn (kernels or ready-to-eat) | -nuts | |
| | | -rice | |
| | | -popcorn (kernels or ready-to-eat) | |
| seeds used as: ingredients inclusions toppings | -baked goods (biscuits, bread, cookies) | -baked goods | -ground coffee |
| | | (biscuits, bread, crackers) | -coffee capsules |
| | -cereal bars, cereals, extruded cereals | | -tea bags |
| | | -canned food | -cocktails (rimming agent) |
| | -chocolate (including ice cream enrobing) | -dried mixes (batters, breadings, crumb coatings, pasta, noodles seasonings, soups, sauces, fillings, stuffings) | |
| | | | -smoothies (gel suspensions) |
| | -confectionary (e.g. chews, chewing gum, gummy sweets, fondants) | | |
| | | | -sports nutrition and protein shakes |
| | - granola (also for nhurt and oatmeal toppings) | | |
| | -ice cream | -meat and fish | |
| | -frozen yoghurt/ yoghurt | products (e.g. burgers, nuggets, sausages) | |
| | -marshmallows | | |
| | -snacks | | |
| | -cream fillings | - sauces (e.g. pasta sauces) | |
| | -sport nutrition and medical food | | |
| | | -snacks and extruded snacks | |

The food applications may also include animal food such as for example dog or cat food, fish foods (as palatants).
Also obtained could be non-food applications such as for example lawn seeds containing germination factors, or poisoned grains for vermin.
The additives can preferably be selected for example from flavouring ingredients, sweeteners, taste potentiators such as capsaicin, colours, anti-oxidants, vitamins or a combination thereof. More preferably, they include one or more of flavouring ingredients, sweeteners, taste enhancers and colours.
Preferably, the temperature in the impregnation chambers is above 31 °C, and more preferably ranges between 31 and 75 °C.
Preferably, the pressure is any pressure higher than 72.8 bars, more preferably between 100 and 400 bars, most preferably higher than 200 bars. It is speculated that the higher the pressure, the shorter the time required for efficient impregnation. The use of much higher pressures is possible but may not be desirable economically due to the extended depressurisation times that may be required.
Preferably, depressurisation step e) is carried out at a rate ranging between 1 and 60 seconds per bar, more preferably between 3 and 20 seconds per bar.
The optional solvent(s), if needed to solubilise the additives used, is/are preferably selected from food-grade polar solvents such as ethanol, and/or water, and food-grade apolar solvents such as triacetin, vegetable oil or medium chain triglyceride (MCT) oil.
The use of supercritical carbon dioxide for injecting or encapsulating additives into seeds, beans, nuts, cereals and pseudo-cereals may offer additional benefits to the finished products. In a review article, M. Perrut (in J- of Supercritical Fluids, 66, 359-371, 2012) reports that the supercritical process protects the infused materials from oxidation or contamination with organic solvents and further prevents bio-burden increase. He also reports that the supercritical process has the ability to kill microorganisms and to inactivate viruses such as human pathogenic strains.

Another embodiment according to the present invention provides the use of supercritical carbon dioxide infusion of seeds, beans, nuts, cereals and pseudo-cereals to provide a one-step process for encapsulating and sterilising.

The present invention also discloses the use of subcritical or supercritical carbon dioxide to infuse additives into seeds, beans, nuts, cereals and pseudo-cereals beneath the external barrier layer.

### Examples.

### Example 1.

45 g of corn kernels were placed in a vessel and introduced in the impregnation chamber. An impregnation solution was then prepared by mixing 10 vol % of peppermint essential oil, 70 vol% of medium chain triglyceride (MCT) oil and 20 vol% of 10% sucralose in ethanol. That impregnation solution was also injected in the impregnation chamber at a temperature of 40 °C, under a pressure of 300 bars, at a flow rate of CO₂ of 6 to 7 g/min and a flow rate of flavouring of 6 to 7 g/min with a mass ratio of impregnating solution/supercritical carbon dioxide of 1:1 and during a period of time of 1 hour. The impregnation chamber was then depressurised at a rate of approximately 10 seconds per bar. The flavoured kernels were removed from the impregnation chamber and washed with about 50 ml of sunflower oil.

The corn kernels were then popped as follows: 50 ml of sunflower oil were placed in a vessel and heated in a 1000 watts microwave for a period of time of 3 minutes. About 20 to 30 of the infused corn kernels were placed in the vessel with the heated oil. The vessel was covered and placed in the microwave oven at full power for 30 to 60 seconds. The popped kernels were then removed and dabbed to remove excess oil.

The infused popcorn showed no signs of charring or burning and did not exhibit a strong odour. However, upon eating, a strong, sweet mint flavour developed in the mouth that grew in intensity as the popcorn mass was masticated. The eating experience demonstrated that the flavour and sweetener were evenly distributed throughout the puffed popcorn mass and both flavour and sweetness remained in the mouth for several minutes after swallowing.

### Example 2.

The experimental procedure of Example 1 was repeated with an impregnation solution of jalapeño-cheese flavour. The flavouring solution was prepared from 45 vol% of aroma chemicals diluted in 45 vol% triacetin and 10 vol% MCT oil.

As in the case of Example 1 described above, the infused popcorn showed no signs of charring or burning and did not exhibit a strong odour. However, upon eating, a strong jalapeno-cheese flavour developed in the mouth that grew in intensity as the popcorn mass was masticated and became spicier over time as the encapsulated capsaicin was released into the mouth. The eating experience demonstrated that the flavour and capsaicin were evenly distributed throughout the puffed popcorn mass and both flavour and spiciness remained in the mouth for several minutes after swallowing.

### Example 3.

The experimental procedure of Example 1 was repeated with an impregnation solution of 0.4% ethanolic sucralose solution (w/w) on quinoa. An impregnation solution was prepared by mixing 0.4 g of sucralose in 96% ethanol. The impregnation solution was injected at a temperature of 40°C, under a pressure of 300 bar at a CO₂ flow rate of 10 g/min and a flow rate of impregnation solution of 1 g/min with a mass ratio CO₂/impregnating solution of 10:1. After 30 minutes of impregnation time, 200 ppm of sucralose was found in the quinoa. The level of sucralose found in quinoa increased to 250 ppm when the impregnation time was increased to 1 hour.

The extraction of sucralose from quinoa was carried out by grinding 10 g of seeds in 80 mL of 96% ethanol using an ultra turrax at 15000 rpm for a period of time of 4 minutes. The solution was filtered using filter paper number 4 to give a clear solution for analysis using a Dionex ion chromatograph with a PA1 column.

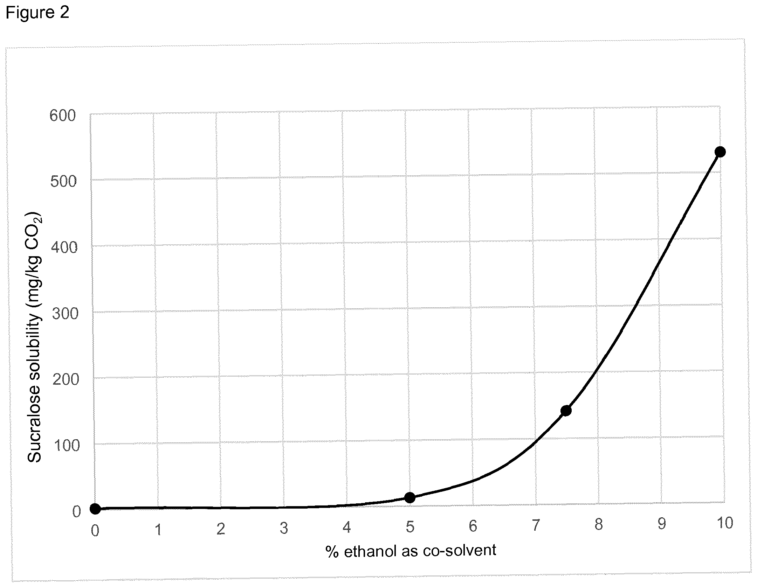

The use of co-solvent (96% ethanol) during impregnation increased the solubility of sucralose in CO₂ impregnation. When 10% of ethanol was mixed with CO₂ (40°C, 300 bar), the solubility of sucralose was of about 500 ppm in CO₂ compared to a solubility of about 2 ppm in neat CO₂ (40°C, 300 bar). Figure 2 represents the solubility of sucralose in supercritical CO₂ (40°C, 300 bar) as a function of percentage of ethanol mixed with CO₂.

### Example 4

The experimental procedure of Example 1 was repeated with an impregnation solution of 50% of (0.3% beta-carotene in sunflower oil) in ethyl acetate on Italian round rice. The impregnation solution used was 1500 ppm of beta-carotene in solution. The impregnation solution was injected at a temperature of 40°C, under a pressure of 300 bar at a flow rate of CO₂ of 10 g/min and a flow rate of impregnation solution of 1 g/min with a mass ratio CO₂/impregnating solution of 10:1 for a period of time of 1 hour giving a final concentration of 150 ppm of beta- carotene in the CO₂ solution.

The extraction was carried out as in Example 3 but the ethanol was substituted with iso-propanol in order to increase the solubility of beta- carotene in solution. The sample was analysed using HPLC -DAD with 5µC18 - MS-II 4.6 x 150 mm Waters Cosmosil column.

Figure 1 represents a photo-micrograph of the longitudinal cross- section of Italian round rice using light microscope. The micrograph shows the impregnation of beta-carotene into the rice. It can be seen that the impregnation depth varies from full impregnation all the way to the core to impregnation of the outer layers: it depends, among other factors, upon surface topology.

### Example 5

The experimental procedure of Example 1 was repeated with an impregnation solution of 0.5% flavour mix in 96% ethanol (w/w) on quinoa. The flavour mix solution consisted of butyric acid, ethyl caproate, furaneol, menthol and vanillin.

The impregnation solution was injected at a temperature of 40°C, under a pressure of 300 bar at a flow rate of CO₂ of 10 g/min and a flow rate of impregnation solution of 1 g/min with a mass ratio CO₂/impregnating solution of 10:1 for a period of time of 1 hour. The flavour flow was stopped after 1 hour and the CO₂ flow of 10 g/min was left running to flush the quinoa for a period of time of 25 minutes.

The extraction and filtration steps were carried out as in Example 3 and analysed using GCMS with a DB-5 capillary column.

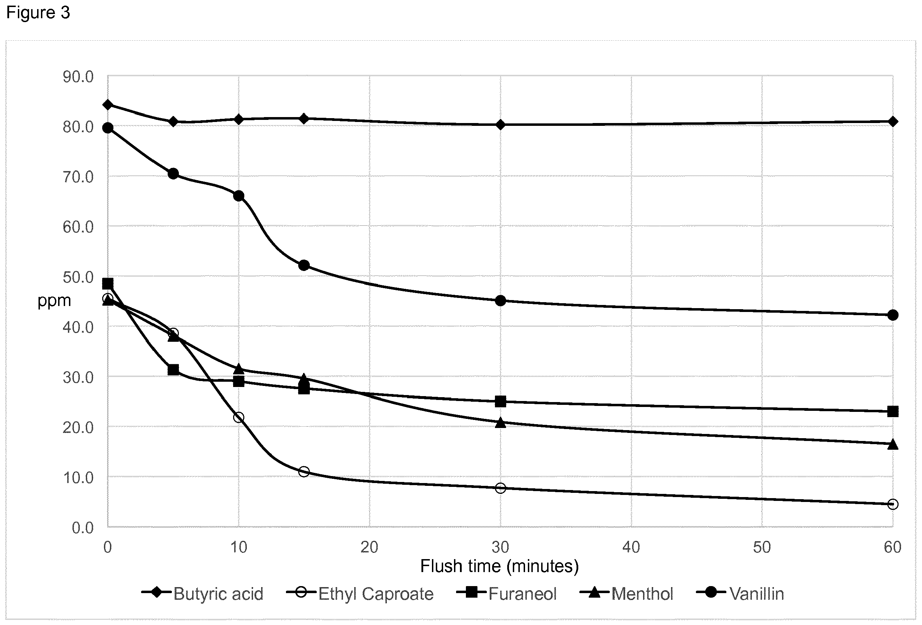

Figure 3 shows the concentration of each flavour molecule in the seed after different CO₂ flush times. After 15 minutes, the level of flavour stabilised thereby suggesting that the impregnation was inside the seeds.

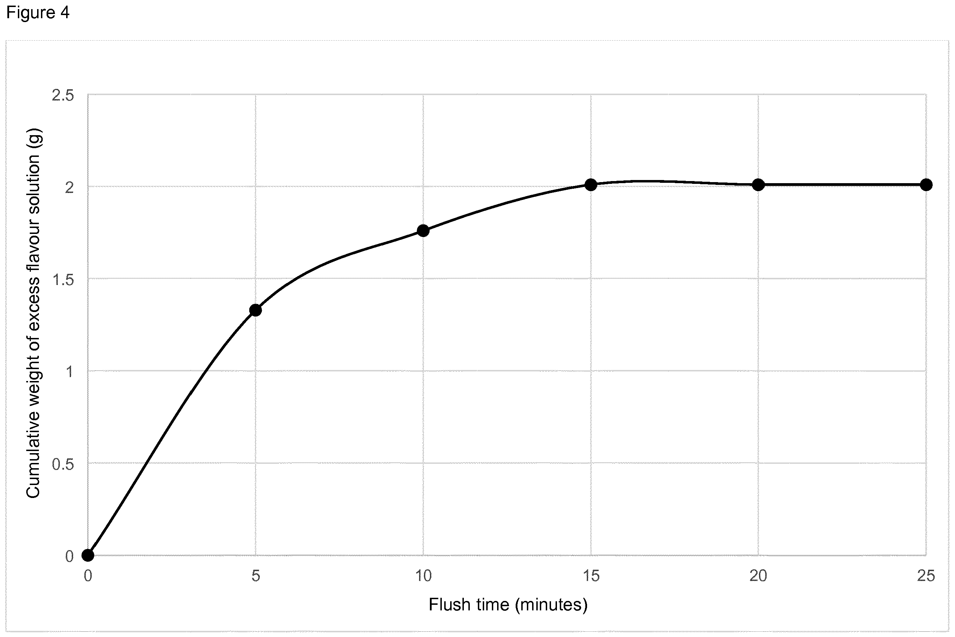

Figure 4 shows the weight of excess flavour solution as a function of CO₂ flush time. It can be seen that after 15 minutes of CO₂ flushing, the excess flavour solution in the impregnation chamber was completely removed.

### Example 6

The experimental procedure of Example 1 was repeated with a selection of cinnamon oil in different solvents on blue poppy seeds. Four different cinnamon solutions were used:
- neat cinnamon oil,
- 20% cinnamon oil in 96% ethanol (w/w),
- 20% cinnamon oil in triacetin (w/w) and
- 40% cinnamon oil in MCT (w/w) wherein MCT is a mixture of medium chain capric and caprylic triglycerides derived from coconut oil.

The impregnation solution was injected at a temperature of 35°C, under a pressure of 100 bar. The flow rate of the CO₂ varied depending on the flow rate of the impregnation solution. All the trials carried out used an overall 2% oil concentration in CO₂ (w/w). For the solvent free trial, the neat cinnamon oil was injected directly at 0.2 g/min at a CO₂ flow rate of 9.8 g/min. In the case of ethanol and triacetin trials, as the oil was diluted, these impregnation solutions were injected at 1 g/min at a flow rate of 9 g/min of CO₂. Due to the limited solubility of MCT in CO₂, the impregnation solution of 40% oil in MCT was injected at 0.5 g/min at a CO₂ flow rate of 9.5 g/min. These infusion trials were carried out with infusion times of respectively 0.5, 1 and 2 hours. An additional 15 minutes CO₂ flush was carried out after each trial in order to remove the excess solution on the surface of the seeds.

The extraction and filtration steps were carried out as in Example 3 and analysed using GCMS with a DB-5 capillary column.

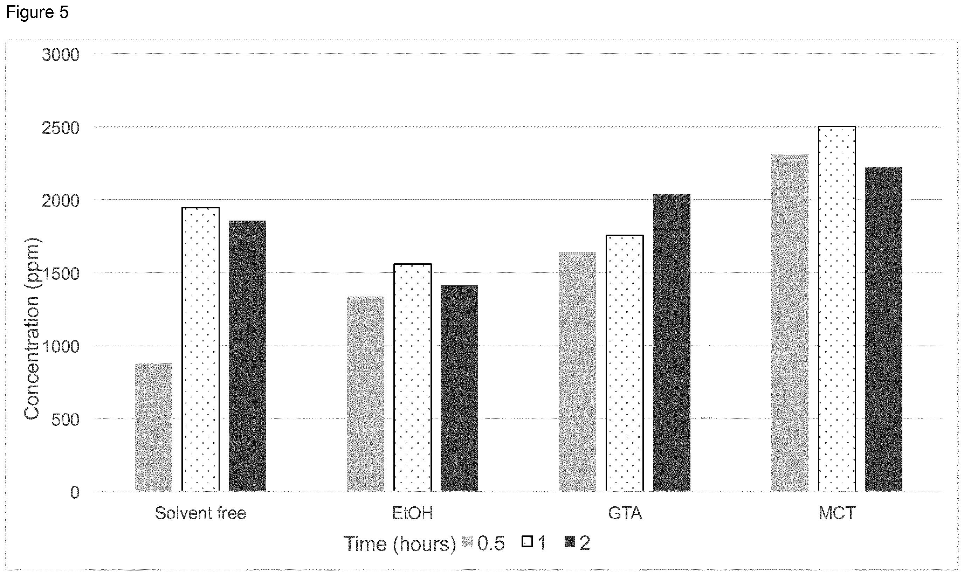

Figure 5 shows the cinnamon oil concentration in blue poppy seeds using different solvents and various infusion times. The cinnamon oil concentration was calculated based on the cinnamaldehyde level at 75% in cinnamon oil (w/w). This experiment highlights the role played by solvent during the infusion process. The highest level of cinnamon oil infused into blue poppy seed is under MCT conditions: a very high level of up to 2500 ppm cinnamon oil was observed after an infusion time of 1 hour.

### Example 7

The experimental procedure of Example 1 was repeated with a neat cinnamon oil on blue poppy seeds using both liquid and supercritical CO₂ conditions.

For liquid CO₂ condition, the impregnation solution was injected at a temperature of 20°C, under a pressure of 70 bar.

For the supercritical CO₂ condition, the impregnation solution was injected at a temperature of 35°C, under a pressure of 100 bar.

Both trials were carried out using a 2% oil concentration in CO₂ (w/w). The neat cinnamon oil was injected directly at 0.2 g/min at a CO₂ flow rate of 9.8 g/min. The infusion trials were carried out respectively during an infusion time of 0.5, 1 and 2 hours. An additional 15 minutes of CO₂ flush was carried out after each trial in order to remove the excess solution on the surface of the seeds

The extraction and filtration steps were carried out as in Example 3 and analysed using GCMS with a DB-5 capillary column.

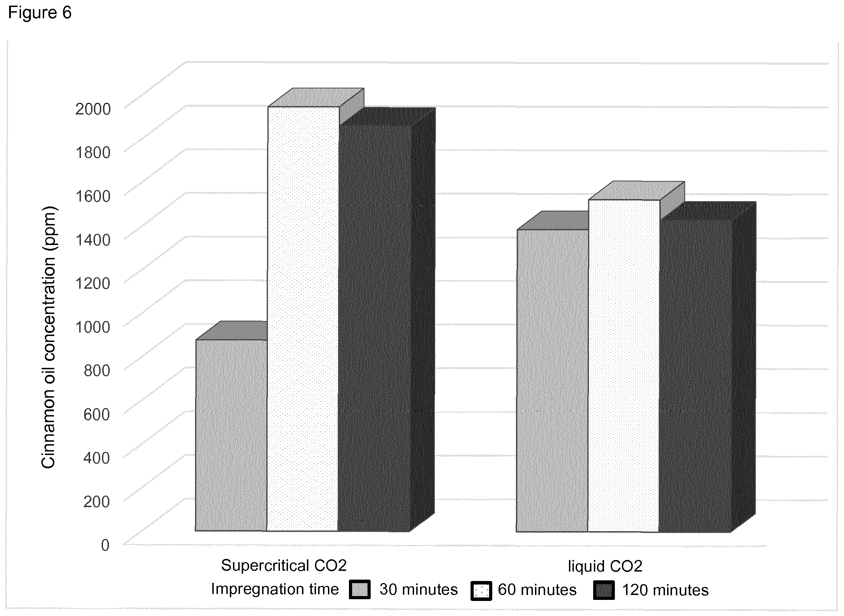

Figure 6 represents the cinnamon oil concentration in blue poppy seeds using respectively liquid and supercritical CO₂ conditions. The cinnamon oil concentration was calculated based on the cinnamaldehyde level at 75% in cinnamon oil (w/w). It can be seen that infusion occurs in both liquid and supercritical CO₂ conditions but that that it depends upon the CO₂ condition, the supercritical CO₂ condition being more efficient than the liquid CO₂ condition.

### Example 8

About 270 g of milled ginger root was placed in the vessel and introduced into a first pressurised chamber. A second chamber was linked in series to the first chamber. A vessel containing 1400 g of quinoa was placed in the second chamber. This gave a ratio of quinoa (seeds) to milled ginger (botanical) of 5:1. The impregnation was carried out by transferring extractables from milled ginger onto quinoa under a pressure of 300 bar and at a temperature of 40°C at a CO₂ flow rate of 20 g/min for 2 a period of time of hours.

The extraction and filtration steps were carried out as in Example 3 and analysed using GCMS with a DB-5 capillary column.

The ginger root consisted of approximately 1.8% ginger oil. The ginger oil concentration was calculated based on the zingiberene level at 40% in ginger oil (w/w) in ginger root. The quinoa sample showed about 135 ppm of ginger oil infused into the seeds after the CO₂ process.

### Example 9

Blue poppy seeds were placed in the extractor and were extracted using CO₂ for a period of time of 2 hours under a pressure of 300 bar at a temperature of 40°C and at a CO₂ flow rate of 10 g/min. 0.9% (w/w) of surface lipids was removed from the poppy seeds. The extracted poppy seeds were then infused using the experimental procedure of example 6. The impregnation solution of 1 % (w/w) cinnamon oil in MCT was injected at a temperature of 40°C, under a pressure of 300 bar for a period of time of 1 hour at a flow rate of 0.5 g/min. An infusion trial of non-extracted poppy seeds was carried out using identical conditions.

The extraction and filtration steps were carried out as in Example 3 and analysed using GCMS with a DB-5 capillary column.

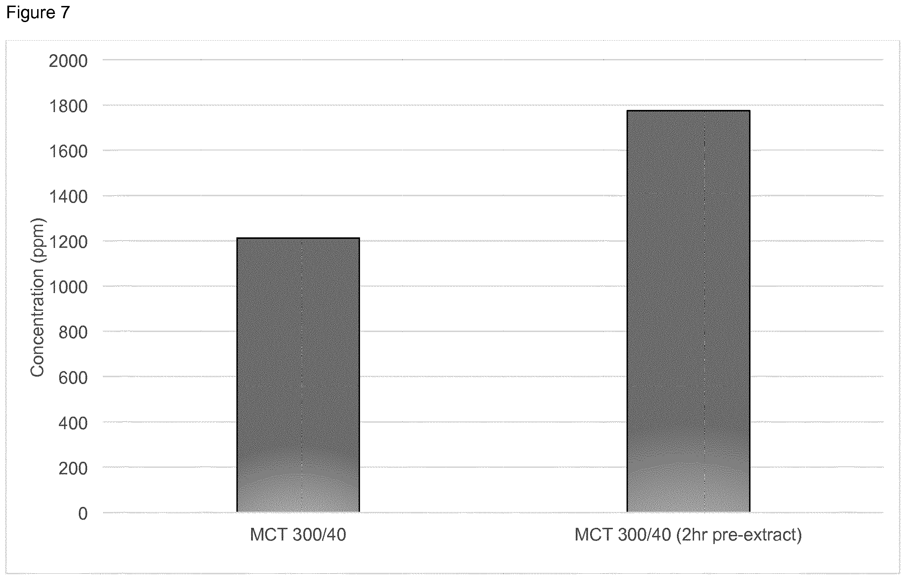

Figure 7 shows the level of cinnamon oil infused into poppy seeds using pre-extracted seeds and non-extracted poppy seeds. It can be observed that the level of cinnamon oil infused in extracted seeds is approximately 1.5 times higher than that of non-extracted seeds. The pre-extracted seeds exhibited a cinnamon oil concentration of almost 1800 ppm as compared to 1200 ppm for the non-extracted seeds. The cinnamon oil concentration was calculated based on the cinnamaldehyde level at 75% in cinnamon oil (w/w). This result shows that the impregnation result was influenced by the surface chemistry of the poppy seeds.

### Example 10

The experimental procedure used in US -5,520,942 was repeated for this example. Flavour solutions of 0.5% (w/w) prepared with 5 different molecules were used for the process. The flavour molecules were selected from butyric acid, ethyl caproate, furanol, methol and vanillin. The CO₂ feed was under a pressure of 100 bar and a temperature of 40°C. It was sprayed onto the quinoa at a pressure of 15 bar and a temperature of 40°C at a flow rate of 20 g/min. The flavour solution was dosed into the CO₂ flow at 0.22 g/min for 15 minutes. The quinoa was then transferred to a vessel and into a pressurised chamber where the seeds were flushed with CO₂ under a pressure of 300 bar and a temperature of 40°C using a CO₂ flow of 10 g/min and for periods of time of respectively 15 and 30 minutes. The flushing step was incorporated into the process in order to remove any excess flavour on the surface of the seeds.

The extraction and filtration steps were carried out as in Example 3 and analysed using GCMS with a DB-5 capillary column.

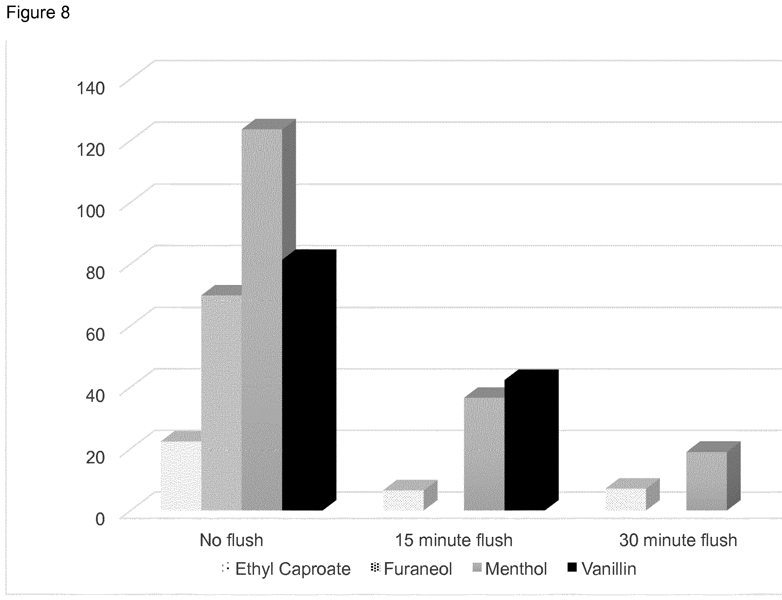

Figure 8 shows the flavour molecules concentration in the seeds directly after the CO₂ spray process and after flushing times of 15 and 30 minutes. A significant level of flavour molecules was removed during the flushing process indicating that most of the flavour was located on the surface of the seeds. Comparing the results of Figure 8, after a 15 minutes flush, with those of Figure 6, also carried out after a 15 minutes flush, but on seeds impregnated with supercritical carbon dioxide, clearly demonstrates the superior efficiency of the present method.

### Example 11

The experimental procedure of Example 1 was repeated with an impregnation solution of 0.5% ethanolic α-tocopherol (w/w) on golden flax seed. The impregnation solution was injected at a temperature of 40°C, under a pressure of 300 bar at a flow rate of CO₂ of 10 g/min and a flow rate of impregnation solution of 1 g/min with a mass ratio CO₂ to impregnating solution of 10:1. The infusion time was 1 hour followed by an additional 15 minutes of CO₂ flush at 10g/min in order to remove the excess anti-oxidant on the surfaces of the seeds. As golden flax seed is high in lipids content, there was a 1% lipids loss during the process.

The extraction and filtration steps were carried out as in Example 3 and analysed using GCMS with a DB-5 capillary column. Due to the high Kovats Index for α-tocopherol, sucrose octa-acetate was used as an internal standard.

After 1 hour of infusion, a concentration of 140 ppm α-tocopherol was infused into the seeds.

### Example 12.

This example compares the flavour released respectively by supercritical CO₂ infused seeds, liquid flavouring and spray-dried flavouring.

For the supercritical impregnation, the experimental procedure of Example 1 was repeated with an impregnation solution consisting of 20% cinnamon oil in 96% ethanol (w/w), using blue poppy seeds. The impregnation solution was injected at a temperature of 40°C, under a pressure of 300 bar at a flow rate of 10 g/min simultaneously with CO₂ at a flow rate of 10 g/min. The seeds were left to dry in air overnight.

The extraction and filtration steps were carried out as in Example 3 and analysed using GC-FID with a DB-5 capillary column. Tetradecane was used as an internal standard. The cinnamon oil concentration was calculated based on the cinnamaldehyde level at 75% in cinnamon oil (w/w). The analytical data showed that approximately 2.3% cinnamon oil was impregnated into the poppy seeds.

The cinnamon liquid flavour used was a solution of 20% cinnamon oil in 96% ethanol (w/w).

The spray-dried cinnamon flavour used was generated using 20% cinnamon oil, 64% maltodextrine and 16% acacia gum (w/w). The flavour powder was obtained by preparing an emulsion of maltodextrine, acacia gum and water. The emulsion was then fed into a spray-drier.

The 3 different types of flavour delivery systems were applied to cereal bars and they were calibrated in order to obtain iso-flavour in all 3 samples. The 2.33% of total cinnamon oil in the supercritical CO₂ seeds was used as a reference to determine the dosage in the cereal bars. Liquid flavour and spray-dried flavour were both dosed in at 0.022 wt% in cereal bars with the assumption that the resulting delivery systems had the same finished level of cinnamaldehyde. The supercritical CO₂ infused seeds were dosed in at 0.8 wt% into the cereal bar recipe. All three delivery systems contain about 14 ppm of cinnamaldehyde and about 19 ppm of cinnamon oil in the application.

The cereal bars were manufactured using glucose syrup, jumbo large oats, rice crispies, white granulated sugar, vegetable oil, small oats, honey and water. Hot sugar syrup was prepared and added to oats, puffed rice and flavouring materials. For the spray-dried and liquid flavour, unflavoured poppy seeds were added into the formula at the same dosage as the flavoured seeds. The flavoured cereal bars were allowed to form and cool.

The flavour release was measured using MS-Nose with a Zebron™ Z-Guard™ column. The Micromass MS-Nose is an interface adapted to the mass spectrometer and designed to analyse volatile compounds. It is based on Atmospheric Pressure lonisation Mass Spectrometry (API-MS) and it can measure odours at concentrations typically around 10 parts per billion in the gas phase at a frequency of 5 to 10Hz. Low dead volume, inert sample introduction system, delivers volatile compounds into the source where they are ionised, at atmospheric pressure, by a high voltage corona discharge. A sampling oriface extracts the ions from the atmospheric pressure region into an intermediate vacuum region, from where they are transported into the analyser region of the mass spectrometer, which separates them based on the mass to charge ratio. Real time monitoring helps understand the delivery of aroma and taste to the receptors during eating and therefore provides information to improve or change the process of flavour perception. It is ideally suited for the analysis, in real time, of volatile compounds in human breath.

For the analysis, a tube was inserted in the nostril of two tasters while they were chewing 7 g of cereal bar samples for a period of time of 30 seconds. Single ion monitoring (SIM) of cinnamaldehyde was used as a marker for identifying responses on cinnamon flavour.

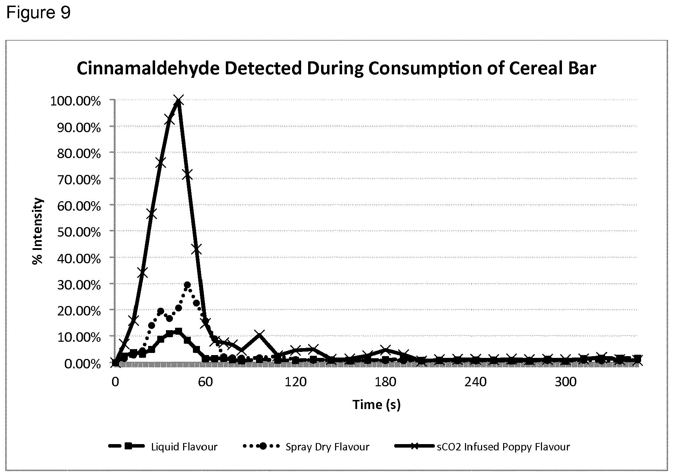

Figure 9 compares flavour release during the consumption of cereal bars using MS-Nose. The Intensity maximum (Iₘₐₓ) of the supercritical CO₂ (ScCO₂) infused flavoured cereal bar is 3 times stronger than that of spray-dried flavour and 8 times stronger than that of liquid flavour. It also shows a longer delay in flavour release and thus longer lasting eating experience in CO₂ infused seeds

The flavour release was also measured by time-intensity sensory analysis using method ASTM E1909-13- Standard Guide for Time-Intensity Evaluation of Sensory Attributes using twelve trained panellists. The assessment was carried out under white light in sensory booths and each panellist was required to chew 7g of cereal bar samples. Six variants were evaluated in a randomised order over several sessions. The panellists were asked to assess the overall intensity of the cinnamon flavour over an eight minutes duration whilst chewing for a period of time of 30 seconds. The sensory data was captured and analysed using Compusense v5.6.

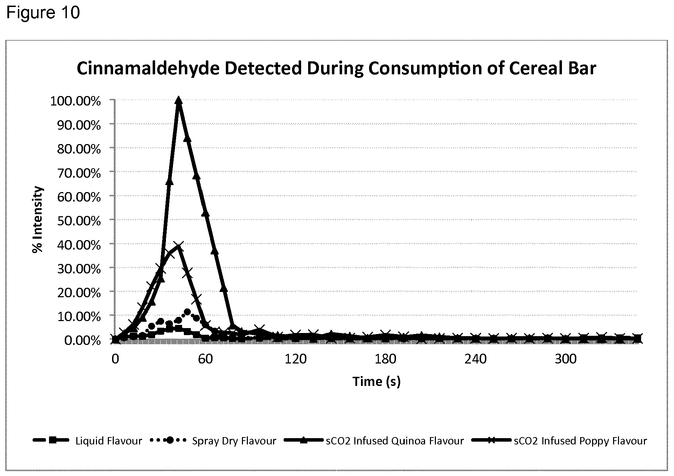

Figure 10 compares the flavour release detected by panellists. The super critical CO₂ (ScCO₂) infused flavour reached both a higher maximum intensity (Iₘₐₓ) and a longer time to maximum intensity (Tₘₐₓ) as compared to spray-dried (SD) and liquid flavour impregnation. This sensory data validates what was already observed in MS-Nose. It also highlights the long lasting flavour release of CO₂ infused flavour as compared to the other two delivery flavour systems. It shows the time elapsed to lose flavour intensity after reaching maximum flavour intensity Iₘₐₓ.

### Example 13.

The procedure of Example 12 was repeated to prepare supercritical CO2 infused cinnamon poppy seeds. The analytical method of Example 12 was used to identify the level of cinnamon oil in the seeds. The analytical data showed that approximately 2.3% cinnamon oil was impregnated into the poppy seeds.

The seeds were stored respectively at -18°C, 25°C and 40°C for a stability test. Three different triangle tests were carried out following the ISO 4120:2007 (Sensory Analysis- Methodology-Triangle test).

All samples were then allowed to equilibrate to room temperature before each sensory test: 7 g of each sample was anonymously presented for evaluation in a sensory booth.

The first triangle test compared seeds stored respectively at -18°C and at 25°C during 4 weeks. A total of 22 Sensient internal trained panellists completed the assessment: 14 incorrect and 8 correct identifications were recorded, based on sensory characteristics.

The second triangle test compared seeds stored respectively at -18°C and at 40°C during 4 weeks. A total of 21 Sensient internal trained panellists completed the assessment: 12 incorrect and 9 correct identifications were recorded based on sensory characteristics.

The third triangle test compared seeds stored respectively at 25°C and at 40°C during 4 weeks. A total of 23 Sensient internal trained panellists completed the assessment: 15 incorrect and 8 correct identifications were recorded based on sensory characteristics.

12 correct identifications are required in order to obtain a 5% significance level. The present test did not reveal any significant difference between the sensory perception of all tested samples at a 5% significance level. This test confirms that the ScCO₂ infused poppy seeds were stable under the conditions tested,

## Claims

1. A method for injecting additives to seeds, beans, nuts, cereals and pseudo-cereals that comprises the steps of:
a) charging an impregnation chamber with the seeds, beans, nuts, cereals and pseudo-cereals;
b) preparing an impregnation fluid by mixing the desired additives, optionally with a solvent and at a volume ratio additives to solvent ranging between 1:0 and 1:200;
c) injecting the impregnation fluid of step b) into the impregnation chamber under subcritical or supercritical CO₂ conditions, and contacting with the seeds, beans, nuts, cereals and pseudo-cereals of step a) for a period of time of at least 15 minutes;
d) optionally flushing the impregnated seeds, beans, nuts, cereals and pseudo-cereals of step c) with subcritical or supercritical CO₂ in order to remove traces of impregnation fluid;
e) depressurising the impregnation chamber;
f) retrieving ready-to-use seeds, beans, nuts, cereals and pseudo-cereals containing the desired additives.

2. The method of claim 1 wherein the solvents of step b), if present, are selected from ethanol, water or propylene glycol, triacetin, vegetable oil or medium chain triglyceride (MCT) oil.

3. The method of claim 1 or claim 2 wherein, in step c), the impregnation fluid is injected into the impregnation chamber under supercritical conditions at a temperature of at least 31 °C and a pressure of at least 72.8 bars.

4. The method of any one of claims 1 to 3 wherein, in step c), the contacting time ranges between 15 minutes and 5 hours.

5. The method of any one of the preceding claims wherein, in step e), the impregnation chamber is depressurised at a rate ranging between 1 and 60 seconds per bar.

6. The method of any one of the preceding claims wherein in step e) the carbon dioxide evaporated during depressurisation is recycled.

7. The method of any one of the preceding claims wherein the additives are selected from flavours, flavour materials, colours, anti-oxidants, vitamins, sweeteners, taste modulators or a combination thereof.

8. The method of claim 7 wherein the additives are flavours, and/or colours, and/or sweeteners.

## Patentansprüche

1. Verfahren zum Einspritzen von Zusatzstoffen in Samen, Bohnen, Nüsse, Getreide und Pseudogetreide, umfassend die Schritte:
a) Beladen einer Imprägnierkammer mit dem/den Samen, Bohnen, Nüssen, Getreide und Pseudogetreide;
b) Herstellen eines Imprägnierfluids durch Mischen der gewünschten Zusatzstoffe, gegebenenfalls mit einem Lösungsmittel in einem Volumenverhältnis von Zusatzstoffen zu Lösungsmittel in dem Bereich zwischen 1:0 und 1:200;
c) Einspritzen des Imprägnierfluids von Schritt b) in die Imprägnierkammer unter unterkritischen oder überkritischen CO₂-Bedingungen und Inkontaktbringen mit dem/den Samen, Bohnen, Nüssen, Getreide und Pseudogetreide von Schritt a) für eine Zeitdauer von wenigstens 15 Minuten;
d) gegebenenfalls Spülen des/der imprägnierten Samen, Bohnen, Nüsse, Getreides und Pseudogetreides von Schritt c) mit unterkritischem oder überkritischem CO₂, um Spuren von Imprägnierfluid zu entfernen;
e) Lösen des Drucks in der Imprägnierkammer;
f) Entnehmen von verwendungsfertigem/verwendungsfertigen Samen, Bohnen, Nüssen, Getreide und Pseudogetreide, das/die die gewünschten Zusatzstoffe enthält/enthalten.

2. Verfahren gemäß Anspruch 1, wobei die Lösungsmittel von Schritt b), falls vorhanden, ausgewählt sind aus Ethanol, Wasser oder Propylenglycol, Triacetin, Pflanzenöl oder Triglyceridöl mit mittlerer Kettenlänge (MCT).

3. Verfahren gemäß Anspruch 1 oder Anspruch 2, wobei bei Schritt c) das Imprägnierfluid unter überkritischen Bedingungen mit einer Temperatur von wenigstens 31 °C und einem Druck von wenigstens 72,8 bar in die Imprägnierkammer eingespritzt wird.

4. Verfahren gemäß einem der Ansprüche 1 bis 3, wobei bei Schritt c) die Kontaktdauer in dem Bereich zwischen 15 Minuten und 5 Stunden liegt.

5. Verfahren gemäß einem der vorstehenden Ansprüche, wobei bei Schritt e) der Druck in der Imprägnierkammer mit einer Rate in dem Bereich zwischen 1 und 60 Sekunden pro bar gelöst wird.

6. Verfahren gemäß einem der vorstehenden Ansprüche, wobei bei Schritt e) das während des Lösens des Drucks verdampfte Kohlendioxid recycelt wird.

7. Verfahren gemäß einem der vorstehenden Ansprüche, wobei die Zusatzstoffe ausgewählt sind aus Aromastoffen, Aromamaterialien, Farbstoffen, Antioxidationsmitteln, Vitaminen, Süßstoffen, Geschmacksmodulatoren und einer Kombination davon.

8. Verfahren gemäß Anspruch 7, wobei die Zusatzstoffe Aromastoffe und/oder Farbstoffe und/oder Süßstoffe sind.

## Revendications

1. Procédé d'injection d'additifs dans des graines, des haricots, des noix, des céréales et des pseudo-céréales, comprenant les étapes consistant à :
a) charger une chambre d'imprégnation avec les graines, les haricots, les noix, les céréales et les pseudo-céréales ;
b) préparer un fluide d'imprégnation par le mélange des additifs désirés, éventuellement avec un solvant et selon un rapport de volume des additifs au solvant compris entre 1:0 et 1:200 ;
c) injecter le fluide d'imprégnation de l'étape b) dans la chambre d'imprégnation dans des conditions de CO₂ sous-critique ou supercritique, et mettre en contact avec les graines, les haricots, les noix, les céréales et les pseudo-céréales de l'étape a) pendant une période de temps d'au moins 15 minutes ;
d) éventuellement balayer les graines, les haricots, les noix, les céréales et les pseudo-céréales imprégnés de l'étape c) par du CO₂ sous-critique ou supercritique, afin d'éliminer les traces de fluide d'imprégnation ;
e) dépressuriser la chambre d'imprégnation ;
f) récupérer les graines, les haricots, les noix, les céréales et les pseudo-céréales prêts à l'emploi contenant les additifs désirés.

2. Procédé selon la revendication 1, dans lequel les solvants de l'étape b), s'ils sont présents, sont choisis parmi l'éthanol, l'eau ou le propylène glycol, la triacétine, une huile végétale ou une huile de triglycérides à chaînes moyennes (MCT).

3. Procédé selon la revendication 1 ou la revendication 2, dans laquelle, dans l'étape c), le fluide d'imprégnation est injecté dans la chambre d'imprégnation dans des conditions supercritiques à une température d'au moins 31°C et une pression d'au moins 72,8 bars.

4. Procédé selon l'une quelconque des revendications 1 à 3, dans laquelle, dans l'étape c), le temps de contact est compris entre 15 minutes et 5 heures.

5. Procédé selon l'une quelconque des revendications précédentes, dans laquelle, dans l'étape e), la chambre d'imprégnation est dépressurisée à une vitesse comprise entre 1 et 60 secondes par bar.

6. Procédé selon l'une quelconque des revendications précédentes, dans laquelle, dans l'étape e), le dioxyde de carbone évaporé lors de la dépressurisation est recyclé.

7. Procédé selon l'une quelconque des revendications précédentes, dans laquelle les additifs sont choisis parmi les arômes, les matériaux aromatiques, les colorants, les antioxydants, les vitamines, les édulcorants, les modulateurs du goût ou une combinaison de ceux-ci.

8. Procédé selon la revendication 7, dans laquelle les additifs sont constitués par les arômes, et/ou les colorants, et/ou les édulcorants.
